**Europäisches Patentamt**

**European Patent Office**

**Office européen des brevets**

(19)

(11) Publication number: **0 210 757**
A2

(12) # EUROPEAN PATENT APPLICATION

(21) Application number: **86305042.3**

(22) Date of filing: **27.06.86**

(51) Int. Cl.⁴: **B 60 R 1/08**

(30) Priority: **27.06.85 US 749494**

(43) Date of publication of application:
**04.02.87 Bulletin 87/6**

(84) Designated Contracting States:
**AT BE CH DE FR GB IT LI LU NL SE**

(71) Applicant: **Von Seidel, Michael**
**5 Romajador Avenue Sandhurst Extension 4**
**Sandton Transvaal Province(ZA)**

(72) Inventor:
**The inventor has agreed to waive his entitlement to**
**designation**

(74) Representative: **Allsop, John Rowland**
**Rowland Allsop & Co. Black Boy Yard 15 High Street**
**West Wycombe High Wycombe, Bucks. HP14 3AE(GB)**

(54) A mirror.

(57) A mirror (1) generally in the form of a rear view or wing mirror with increased field of view but with perspective being substantially retained is provided. The mirror comprises two integral and continuous mirror sections (5,6), one (5) of which is flat to provide for recognition of distance and the other (6) of which laterally adjoins and merges with the flat mirror in tangential manner whilst being of convex shape to increase the lateral field of view whilst maintaining perspective of image to some extent at least. The mirror is generally held in a body or frame (2) having a mounting foot (4) or arm (3) attached thereto.

FIG.1

EP 0 210 757 A2

Croydon Printing Company Ltd

## FIELD OF THE INVENTION

THIS INVENTION relates to a mirror such a rear view mirror of the general type employed for enabling an operator to view in a rearward direction particularly a driver of a motor vehicle or other land or water vehicle. Still more particularly, although not exclusively, the invention relates to what are widely termed "wing mirrors" and which are employed on the outside of a motor vehicle either on a door adjacent a front seat thereof and, particularly, but not exclusively, adjacent a driver's seat, or on a front fender of a vehicle.

## BACKGROUND TO THE INVENTION

Wing mirrors, particularly those used on the door of a motor vehicle, suffer from the disadvantage that ordinary flat mirrors, which provide a realistic size of image (and thus correctly indicate distance) have insufficient field of view to enable a driver to see, in the mirror, a vehicle positioned in the well known "blind-spot" immediately adjacent the vehicle and somewhat to the rear of the driver. In an effort to overcome this disadvantage, it is well known to make such wing mirrors to a convex (part spherical) shape so that a very much increased field of vision is obtained. However, the disadvantage of this course of action is that a reduced size of image is presented in the mirror which, in turn, leads to a distorted impression as to the distance from the mirror of an object reflected therein.

In a further effort to avoid this disadvantage, there has been made available a flat mirror having a small convex mirror in the centre, or to one side, thereof. The distance mentioned above can therefore be estimated from the flat mirror whilst the convex mirror covers the required additional field of vision   This arrangement has the disadvantage that a zone of flat mirror is rendered substantially inoperative by the convex mirror and any reduced size image appearing therein will have the same disadvantage regarding its distance from the mirror as indicated above. Also, only part, and possibly none,

/...

of any required image will appear in the flat region of the mirror. Also the eyes of an observer must refocus over a very short distance between the two totally different mirror surfaces.

Further efforts to overcome the problem include a number of different arrangements in which a flat mirror is either bent into two or more sections or has a lateral zone curved to a part cylindrical shape to provide an increased field of view. However, bending a flat mirror to provide a part cylindrical surface in this manner generally results in a change of mirror character which takes place over too short a distance and also a total loss of proportion in the curved part of the mirror. The images of objects are simply too narrow and tall and in fact become extremely difficult to recognise. Proposals of this general nature form the subject matter of granted United States Patent Numbers :-

4,331.382 to Graff

3,028,794 to Kinkella

2,857,810 to Troedle

3,501,227 to Landen, and,

3,628,851 to Robertson.

It is the object of this invention to provide a rear view mirror which will alleviate, at least to some extent, the above disadvantages and which may, in addition, provide the advantage that it will be simple for an observer to detect when an object is in the usual "blind-spot" in relation to a motor vehicle.

## SUMMARY OF THE INVENTION

In accordance with this invention there is provided a mirror having in the plane of the mirror a first dimension and a second dimension at right angles to the first dimension and wherein the mirror comprises a flat mirror section made integral with, and merging into, a convex mirror section which lies in the path of the second dimension, the flat mirror section communicating substantially tangentially with the convex mirror section such that the mirror, in the direction of the second dimension, has a cross-section comprising a straight portion communicating tangentially with a curved portion, the convex section having a cross-sectional shape in a direction parallel to said first dimension which increases in convexity with increasing distance from the flat mirror section.

/...

A further feature of the invention provides for the convex mirror section to also increase in convexity in the direction of the second dimension with increasing distance from the flat mirror section. A section through the mirror in this direction therefore may follow the path of a spiral or volute.

The cross-section of the convex section of the mirror in a direction parallel to the first dimension is conveniently part-circular with the radius of curvature decreasing with increasing distance from the flat mirror section.

The cross-section of the mirror in the direction parallel to the second dimension may be a straight line merging tangentially with a curved line which may be part-circular (ie. of fixed radius of curvature) but is preferably one which increases in convexity with increasing distance from the flat mirror section. In the latter case the curved line may be considered to have an "instantaneous" radius of curvature in the direction of the second dimension which will decrease either stepwise or continuously. A stepwise decrease facilitates physically generating the surface on a pattern.   Most preferably such "instantaneous" radius of curvature is substantially equal to the radius of curvature in a direction parallel to the first dimension at all points on the convex mirror section.

It is to be understood that in this specification the terms "increasing and decreasing convexity" correspond to "decreasing and increasing instantaneous radii of curvature" respectively.

It will be understood that the radii of curvature and dimensions of the mirror will be chosen, in each case, to provide the required field of view. It should be noted that an image in the convex mirror section will be somewhat distorted and it is part of the advantage of the present invention that when a distorted image is viewed, a driver will know that the object being reflected is within the usual "blind-spot" area.   However, such an image will not be so distorted as to be unrecognisable.   It is also within the scope of this invention that the convex section of the mirror could be slightly tinted with any suitable colour to indicate that an object being reflected is located within such "blind-spot" area.

/...

In order that the invention may be more fully understood, various embodiments of the invention, in the form of a rear view wing mirror, will now be described.

## BRIEF DESCRIPTION OF THE DRAWINGS

In the drawings :

FIG. 1    is an isometric view of a wing mirror according to this invention;

FIG. 2    is a diagrammatic cross-section taken along the second dimension of the mirror indicated by line "A" in Fig. 1 illustrating the optical view lines achieved by a mirror of the invention itself (without the body, frame or the like);

FIG. 3    is an isometric view of a mirror surface according to the invention which can be generated on a lathe for pattern making purposes;

FIG. 4    is an isometric view of a mirror
          alone in which the convex mirror
          section conforms to an alternative
          and preferred shape;

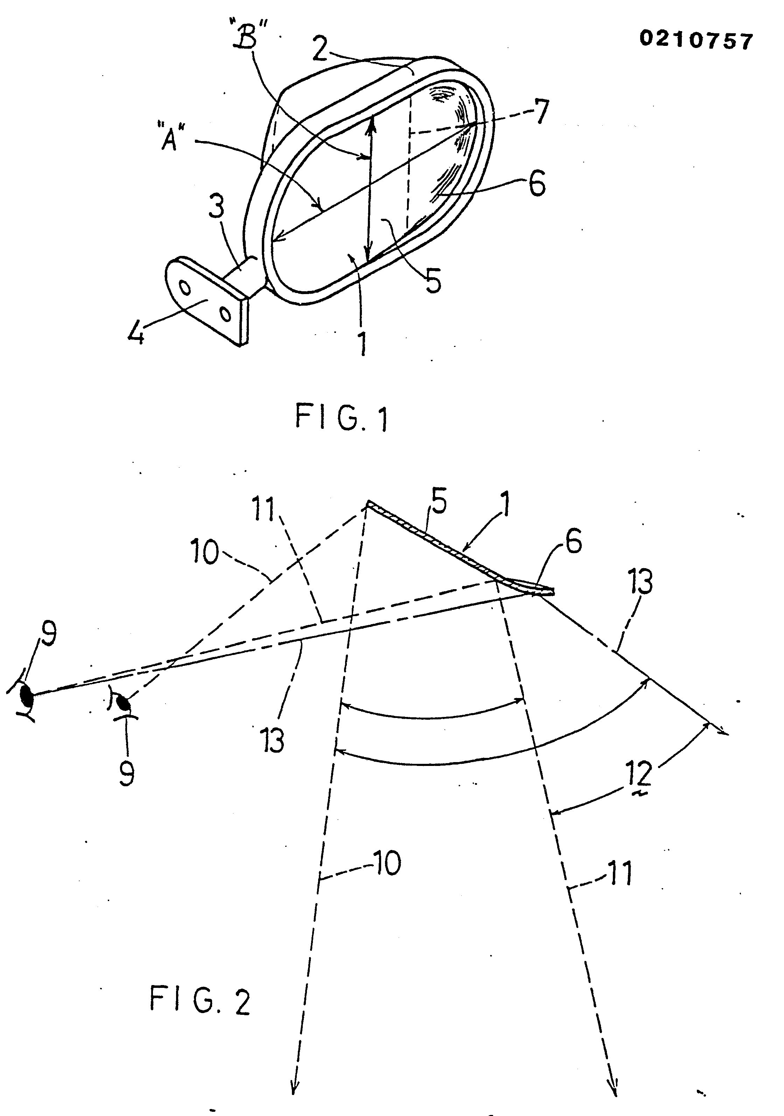

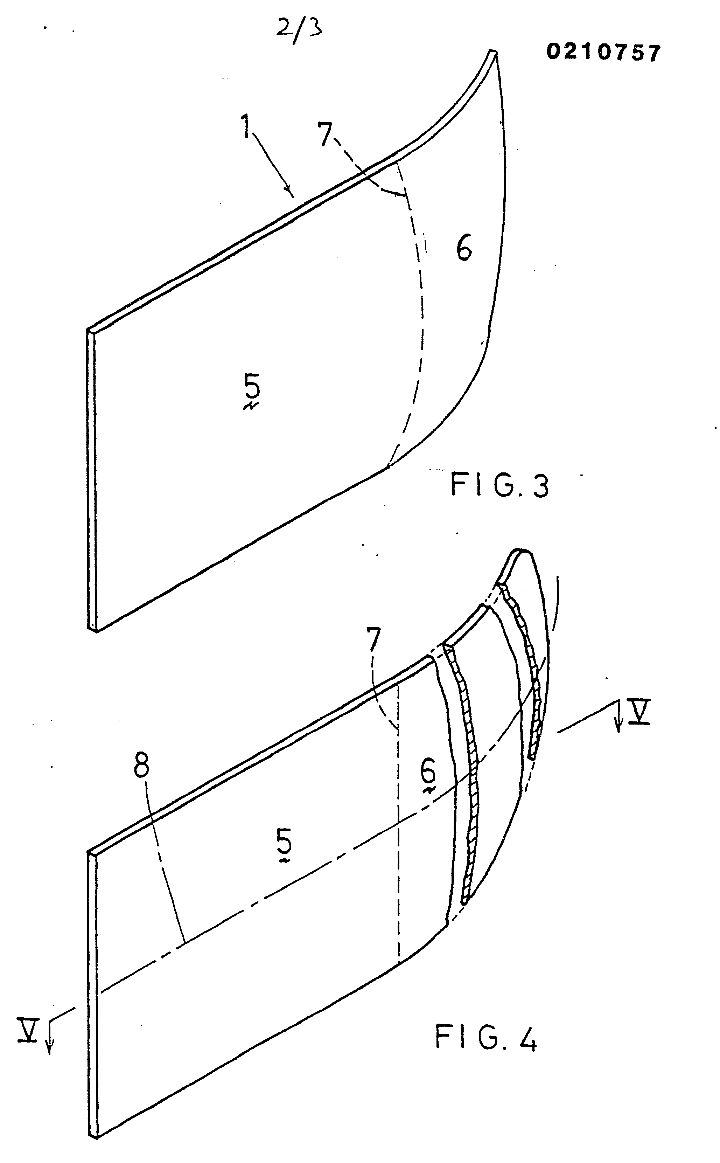

FIG. 5    is a sectional view taken in the
          direction of the second dimension of
          the mirror (ie. along line V - V in
          Fig. 4 and in the direction of line
          "A" in Fig. 1;  and,

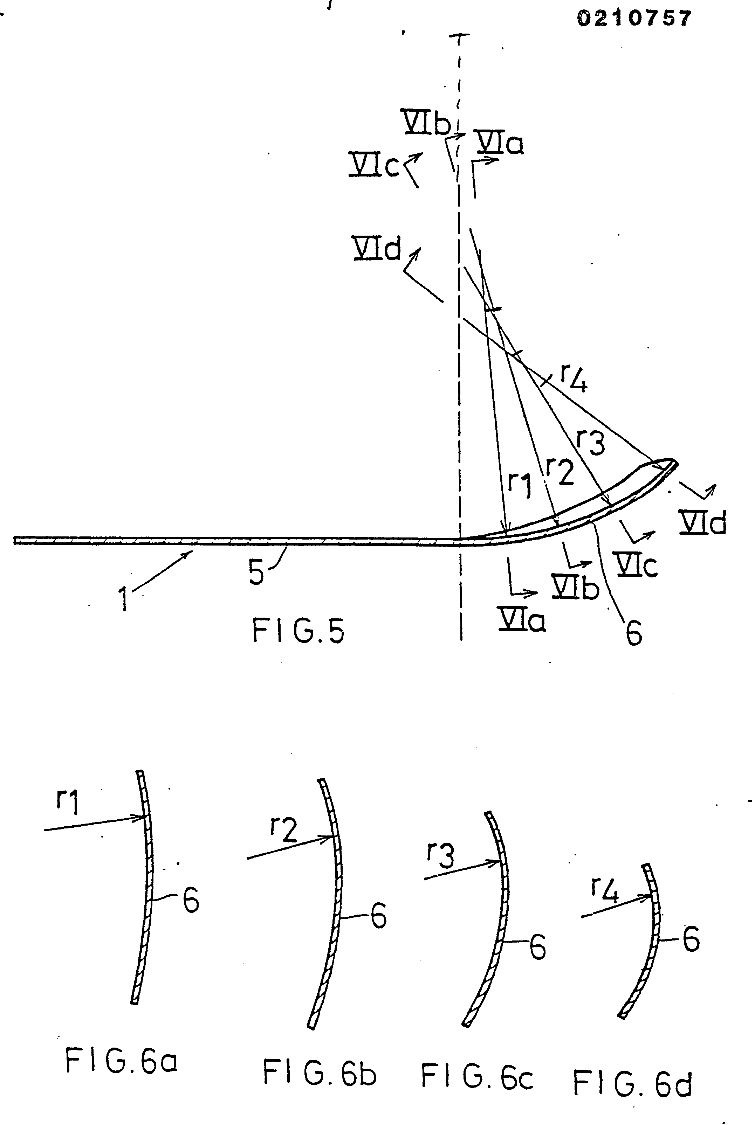

FIGS. 6a  to 6d illustrate some cross-sections
          taken at lines VIa to VIa;  VIb to
          VIb;  VIc to VIc;  and VId to VId
          respectively in Fig. 5 in directions
          parallel to the first dimension of
          the mirror as indicated by line "B"
          in Fig. 1.

DETAILED DESCRIPTION WITH REFERENCE TO THE DRAWINGS

In all the illustrated embodiments of the
invention a wing mirror (1) is carried in a body or
frame (2) mounted on an arm (3) having a mounting foot
(4).   The mirror itself has two integral sections (5)

/...

and (6), the one (5) of which is a flat mirror section and the other (6) of which is of a convex shape. The "break away" line of join between these two sections (5) and (6) of the mirror is indicated by dotted line (7) as being a straight line but it may also be an arcuate line as in the case of the mirror shown in Fig. 3.

In the case of the embodiment illustrated in Fig. 3 the convex section is formed by turning a pattern for the mirror on a lathe and moving the tool to form the radius of curvature in the direction parallel to the second dimension. The "break away" line (7) is, therefore, of part circular shape in this case.

In the case of the embodiment illustrated in Figs. 4 to 6 the "break away" line (7) is straight and the mirror surface assumes its preferred shape. The mirror surface thus deviates from a straight section as it enters the convex mirror section in the direction of the second dimension (ie. line "A" in Fig. 1). The convex section may have a constant radius of curvature in this direction but, in order to provide for the least distortion, preferably has a decreasing radius of curvature.   Such radius of curvature preferably decreases constantly but for the purpose of facilitating development of a pattern surface, it may decrease in a step-wise manner so long as the surfaces are tangential to each other at the positions where the radius decreases by a stepped amount (ie. increasing convexity).   The radius of curvature of the convex section of the mirror in cross-section in directions parallel to the first dimension of the miror (ie. parallel to line "B" in Fig. 1) at any particular point is preferably equal to the radius of curvature of the mirror at that same point in the direction parallel to the second dimension (ie. line "A" in Fig. 1).

In such preferred form therefore, the radius of curvature will decrease as the distance increases from the "break away" line (7).   Thus, as shown clearly in Fig. 5, $r_1$ is greater than $r_2$ which is greater than $r_3$ which is greater than $r_4$.   The radius of curvature in cross-section (in directions parallel to the dimension) is illustrated in Figs. 6a to 6d respectively as being equal to the radius of curvature in the direction of the second dimension at any particular point along its length.

/...

Referring now more particularly to Fig. 2, it will be seen that the flat section (2) of the mirror has extremities of vision, relative to a pair of hypothetical eyes given by lines of vision indicated by numerals (10) and (11). That indicated by numeral (10) constitutes the innermost limit of vision whilst that indicated by numeral (11) indicates the outermost line of vision. Thus, there is, as usual, a substantial "blind-spot" in the general area indicated by numeral (12).

The convex section (6) of the mirror according to this invention, as indicated by extremity line of vision indicated by numeral (13), embraces this general area and, in fact, can, depending on the size of the mirror, and the radii of curvature thereof, be made to bring the field of vision up to substantially that of a driver looking roughly forwardly and what is seen out of the corner of his eye..

As indicated above, it will be appreciated, that the radius of curvature should not be too small otherwise the image of an object will be excessively distorted and possibly be unrecognisable. The preferred idea is to render the object recognisable

/...

but in somewhat distorted image so that a driver will then be aware of the fact that the object is in what is usually considered to be the "blind-spot".

It will be understood that numerous variations may be made to the above described embodiments of the invention without departing from the scope hereof.

The invention therefore provides an extremely simple yet highly effective rear view mirror which will, it is considered, do away with the general difficulties outlined above and which are associated with presently available mirrors or mirror assemblies.

Also, the invention is not to be interpreted as being confined in scope to a convex section being only on one side of a flat mirror section and, in fact, an arcuate mirror section could be provided at two opposite sides of a flat mirror section or around the entire periphery of the flat mirror section, if required. In the latter case, the flat mirror section could be circular, thus providing a convex type of mirror but with a central flat section.

/...

The mirrors of this invention can be made by any suitable methods of manufacture such as moulding of a mirror backing following by silvering and the application of any protective coatings or the like as may be required.    In particular, it is envisaged that mass production will be most easily carried out by injection or press moulding a backing or even vacuum forming such backing.    In any event, all conventional techniques can be employed as only the contour of the reflective surface is different from mirrors currently being manufactured.

/...

# Claims

1. A mirror (1) having in the plane of the mirror a first dimension ("B") and a second dimension ("A") at right angles to the first dimension and wherein the mirror comprises a flat mirror section (5) made integral with, and merging into, a convex section (6) which lies in the path of the second dimension, the flat mirror section communicating substantially tangentially with the convex mirror section such that the mirror, in the direction of the second dimension, has a cross-section comprising a straight portion communicating tangentially with a curved portion, the convex section having a cross-sectional shape in a direction parallel to said first dimension which increases in convexity with increasing distance from the flat mirror section.

/...

2. A mirror as claimed in claim 1 in which the convex mirror section (6) increases in convexity in the direction of the second dimension ("A") of the mirror with increasing distance from the flat mirror section (5).

3. A mirror as claimed in claim 2 in which the convexity of the convex mirror section (6) is substantially the same in the direction of the first dimension ("B") as it is in the direction of the second dimension ("A") at all positions on the convex mirror section (6).

4. A mirror as claimed in claim 1 in which the cross-section of the convex mirror section (6) is in the direction of the first dimension ("B"), substantially part-circular in shape at all positions thereon.

5. A mirror as claimed in claim 1 in which the break-away line (7) where the flat (5) and convex (6) mirror sections meet tangentially is a straight line.

/...

6.     A mirror as claimed in claim 1 in which the break-away line (7) where the flat (5) and convex mirror sections meet tangentially is a curved line.

7.     A mirror as claimed in claim 2 in which the convexity of the convex mirror section (6) increases in a stepwise manner with increasing distance from the flat mirror section (5).

8.     A mirror (1) as claimed in claim 2 in which the convexity of the convex mirror section increases continuously with increasing distance from the flat mirror section (5).

9.     A mirror as claimed in claim 1 in which the mirror (1) is a rear view mirror held in a suitable body or frame (2) therefor.

10.     A mirror as claimed in claim 9 in which the body or frame (2) is carried by a mounting foot (4) or arm (3).

11.    A mirror as claimed in claim 1 in which the convex mirror section (6) is of a different colour tint from that of the flat mirror section (5).

0210757

FIG. 1

FIG. 2

0210757

FIG. 3

FIG. 4

FIG.5

FIG.6a

FIG.6b

FIG.6c

FIG.6d